(19) Europäisches Patentamt
European Patent Office
Office européen des brevets

(11) Veröffentlichungsnummer: **0 645 421 A2**

# (12) EUROPÄISCHE PATENTANMELDUNG

(21) Anmeldenummer: **94114681.3**

(51) Int. Cl.$^6$: **C08K 5/098**, C08L 23/10

(22) Anmeldetag: **17.09.94**

(30) Priorität: **25.09.93 DE 4332766**
**25.09.93 DE 4332765**
**25.09.93 DE 4332779**

(43) Veröffentlichungstag der Anmeldung:
**29.03.95 Patentblatt 95/13**

(84) Benannte Vertragsstaaten:
**BE DE ES FR GB IT NL**

(71) Anmelder: **BASF Aktiengesellschaft**
**Carl-Bosch-Strasse 38**
**D-67063 Ludwigshafen (DE)**

(72) Erfinder: **Marczinke, Bernd Lothar, Dr.**
**Wormser Landstrasse 17**
**D-67346 Speyer (DE)**
Erfinder: **Schwager, Harald, Dr.**
**Ziegelofenweg 7**
**D-67346 Speyer (DE)**
Erfinder: **Kölle, Peter, Dr.**
**Auf dem Köppel 2/11**
**D-67098 Bad Durkheim (DE)**
Erfinder: **Hofmann, Jürgen**
**Muenschbuschweg 30c**
**D-67069 Ludwigshafen (DE)**
Erfinder: **Hingmann, Roland, Dr.**
**Stahlbühlring 54**
**D-68526 Ladenburg (DE)**

## (54) Mit Metallverbindungen teilvernetzte Kunststoffmassen.

(57) Teilvernetzte Kunststoffmassen mit einem Schmelzflußindex von 0,1 bis 100 g/10 min., bei 230 °C und unter einem Gewicht von 2,16 kg, aus

$a_1$) einem Polymerisat aus 25 bis 97 Gew.-% eines Propylencopolymerisats (I), das 0,1 bis 15 Gew.-% an einpolymerisierten $C_2$-$C_{10}$-Alk-1-enen enthält und aus 3 bis 75 Gew.-% eines weiteren Propylencopolymerisats (II), das 15 bis 80 Gew.-% einpolymerisierte $C_2$-$C_{10}$-Alk-1-ene aufweist oder aus

$a_2$) einem Polymerisat aus 25 bis 97 Gew.-% eines Propylenhomopolymerisats und 3 bis 75 Gew.-% eines Propylencopolymerisats mit einpolymerisierten $C_2$-$C_{10}$-Alk-1-enen, wobei der Comonomerengehalt 15 bis 80 Gew.-%, bezogen auf die letztere Komponente beträgt oder aus

$a_3$) einem Propylenhomopolymerisat mit einem Schmelzflußindex von 0,01 bis 100 g/10 min, bei 230 °C und unter einem Gewicht von 2,16 kg oder aus

$a_4$) einem statistischen Propylencopolymerisat mit einpolymerisierten $C_2$-$C_{10}$-Alk-1-enen, wobei der Comonomerengehalt weniger als 15 Gew.-% beträgt und

b) einer Metallverbindung einer der folgenden Formeln (Ia) oder (Ib)

EP 0 645 421 A2

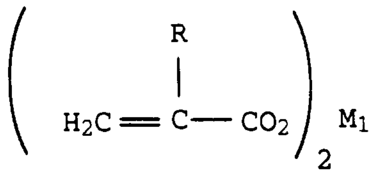

(Ia) ,

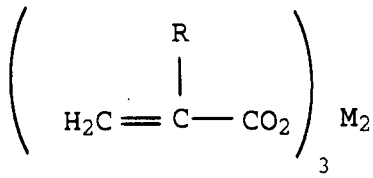

(Ib) ,

wobei

- R für Wasserstoff oder eine $C_1$-$C_4$-Alkylgruppe steht,
- $M_1$ ein Metall der II. Hauptgruppe des Periodensystems oder Zink bedeutet und
- $M_2$ Bor oder Aluminium bedeutet,

erhältlich durch Umsetzung des Polymerisats a) mit der Metallverbindung b) bei Temperaturen von 180 bis 280 °C, Drücken von 1 bis 100 bar und mittleren Verweilzeiten des Reaktionsgemisches von 0,2 bis 10 Minuten.

Die vorliegende Erfindung betrifft teilvernetzte Kunststoffmassen mit einem Schmelzflußindex von 0,1 bis 100 g/10 min., bei 230 °C und unter einem Gewicht von 2,16 kg, aus

$a_2$) einem Polymerisat aus 25 bis 97 Gew.-% eines Propylencopolymerisats (I), das 0,1 bis 15 Gew.-% an einpolymerisierten $C_2$-$C_{10}$-Alk-1-enen enthält und aus 3 bis 75 Gew.-% eines weiteren Propylencopolymerisats (II), das 15 bis 80 Gew.-% einpolymerisierte $C_2$-$C_{10}$-Alk-1-ene aufweist oder aus

$a_2$) einem Polymerisat aus 25 bis 97 Gew.-% eines Propylenhomopolymerisats und 3 bis 75 Gew.-% eines Propylencopolymerisats mit einpolymerisierten $C_2$-$C_{10}$-Alk-1-enen, wobei der Comonomerengehalt 15 bis 80 Gew.-%, bezogen auf die letztere Komponente beträgt oder aus

$a_3$) einem Propylenhomopolymerisat mit einem Schmelzflußindex von 0,01 bis 100 g/10 min, bei 230 °C und unter einem Gewicht von 2,16 kg oder aus

$a_4$) einem statistischen Propylencopolymerisat mit einpolymerisierten $C_2$-$C_{10}$-Alk-1-enen, wobei der Comonomerengehalt weniger als 15 Gew.-% beträgt und

b) einer Metallverbindung einer der folgenden Formeln (Ia) oder (Ib)

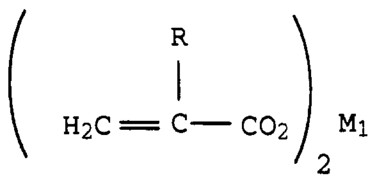

(Ia) ,

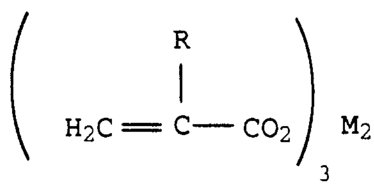

(Ib) ,

wobei

- R für Wasserstoff oder eine $C_1$-$C_4$-Alkylgruppe steht,
- $M_1$ ein Metall der II. Hauptgruppe des Periodensystems oder Zink bedeutet und
- $M_2$ Bor oder Aluminium bedeutet,

Außerdem betrifft die vorliegende Erfindung ein Verfahren zur Herstellung von teilvernetzten Kunststoffmassen, sowie Folien, Fasern, Formkörpern und Schaumstoffen aus diesen Kunststoffmassen.

Vernetzte Polymerisate weisen gegenüber nicht vernetzten Polymerisaten den Vorteil einer höheren mechanischen Stabilität auf. Vollständig vernetzte Materialien lassen sich aber aufgrund ihres geringen Schmelzflusses thermisch nicht mehr mit den in der Kunststofftechnik üblichen Methoden verformen (H. G. Elias, "Makromoleküle", Verlag Hüthig & Wepf, 4. Auflage, Seite 1 000 bis 1 003). Für die Verarbeitung von Polymerisaten ist es deshalb notwendig, darauf zu achten, daß der Vernetzungsgrad der Polymerisate nicht zu hoch liegt, so daß diese noch mit den in der Kunststofftechnik üblichen Apparaturen verformt werden können.

Es ist bekannt, Polymerisate des Propylens mit ungesättigten Silanen in Gegenwart eines Kondensationskatalysators und eines Peroxids zu vernetzen (DE-A 33 27 149 und DE-A 35 20 106). Die dabei erhaltenen Polymerisate zeichnen sich u.a. durch eine hohe Kälteschlagzähigkeit und Formbeständigkeit aus. Die Vernetzung mit Hilfe ungesättigter Silane ist jedoch verfahrenstechnisch relativ aufwendig, da in diesem Fall drei verschiedene Komponenten, das Silan, der Katalysator und das Peroxid eingesetzt werden müssen.

Kautschuke auf der Basis von Ethylen und Propylen können mittels Bismaleinimidoverbindungen vernetzt werden, vorausgesetzt, daß radikalisch zerfallende Initiatoren (DE-A 42 19 860; P.O. Towney et al: J. Appln. Polym. Sci. 8, 2281ff (1964)) mitverwendet werden oder energiereiche Strahlung (siehe S.M. Miller et al: J. Polym. Sci. 58, 737 (1962)) die Reaktion initiiert. Bei diesen Verfahren beobachtet man gelegentlich einen Molmassenabbau, der die mechanischen Eigenschaften der Produkte deutlich verschlechtert. Darüber hinaus wird bei den daraus erhaltenen Produkten häufig festgestellt, daß diese verfärbt sind.

Weiterhin ist bekannt, Kautschuke mit mehrwertigen Metallsalzen der Acrylsäure oder der Methacrylsäure in Gegenwart von radikalischen Initiatoren zu vernetzen. Die US-A 4 857 571 beschreibt beispielsweise ein Verfahren, nach welchem Kautschuke auf Basis von Propylen und Ethylen, Nitrilkautschuke oder

Fluorkautschuke mit Zinkdimethacrylat in Gegenwart von phenolischen Vulkanisationsinhibitoren mit Hilfe von organischen Peroxiden vernetzt werden. Aus der US-A 4 713 409 ist bekannt, Copolymerisate des Propylens und Ethylens oder Nitrilkautschuke in Gegenwart von Füllstoffen mit Zinkdimethacrylat zu vernetzen, wobei die Reaktion durch den Zerfall von organischen Peroxiden katalysiert wird. Terpolymerisate aus Ethylen, Propylen und Dienen lassen sich ebenfalls mit Zinkdimethacrylaten vernetzen (EP-A 390012). Die Vernetzung derartiger Terpolymerisate aus Ethylen, Propylen und Dienen mit Zinkdimethacrylaten kann auch durch Gammastrahlung oder Elektronenstrahlung initiiert werden. Bei diesen Verfahren hat es sich aber als nachteilig erwiesen, daß dabei relativ hohe Vernetzermengen verwendet werden müssen. Darüber hinaus sind diese Verfahren häufig technisch aufwendig.

Der vorliegenden Erfindung lag daher die Aufgabe zugrunde, den geschilderten Nachteilen abzuhelfen und teilvernetzte Kunststoffmassen mit guten anwendungstechnischen Eigenschaften zu entwickeln, die nach einem wenig aufwendigen Verfahren hergestellt werden können, wobei die Menge des dabei eingesetzten Vernetzers begrenzt werden kann.

Demgemäß wurden die eingangs definierten, teilvernetzten Kunststoffmassen gefunden.

Die erfindungsgemäßen teilvernetzten Kunststoffmassen weisen einen Schmelzflußindex von 0,1 bis 100 g/10 min., bei 230 °C und unter einem Gewicht von 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230 °C und unter einem Gewicht von 2,16 kg ausgepreßt wird. Besonders bevorzugt sind dabei solche teilvernetzten Kunststoffmassen, deren Schmelzflußindex 0,1 bis 50 g/10 min, bei 230 °C und unter einem Gewicht von 2,16 kg, beträgt.

Die erfindungsgemäßen teilvernetzten Kunststoffmassen können zum einen aus einem Polymerisat $a_1$) bestehen, welches 25 bis 97 Gew.-% eines Propylencopolymerisats (I), das 0,1 bis 15 Gew.-% an einpolymerisierten $C_2$-$C_{10}$-Alk-1-enen enthält und 3 bis 75 Gew.-% eines weiteren Propylencopolymerisats (II) mit 15 bis 80 Gew.-% einpolymerisierter $C_2$-$C_{10}$-Alk-1-ene, aufweist. Bevorzugt sind dabei solche Kunststoffmassen, deren Polymerisat $a_1$) 35 bis 95 Gew.-% eines Propylencopolymerisats (I) mit 0,2 bis 12 Gew.-% einpolymerisierter $C_2$-$C_{10}$-Alk-1-ene und 5 bis 65 Gew.-% eines Propylencopolymerisats (II) mit 20 bis 75 Gew.-% einpolymerisierter $C_2$-$C_{10}$-Alk-1-ene enthält. Unter diesen Kunststoffmassen werden solche besonders bevorzugt eingesetzt, deren Polymerisat $a_1$) aus 40 bis 93 Gew.-% eines Propylencopolymerisats (I) mit 0,3 bis 9 Gew.-% einpolymerisierter $C_2$-$C_{10}$-Alk-1-ene und aus 7 bis 60 Gew.-% eines Propylencopolymerisats (II) mit 25 bis 70 Gew.-% einpolymerisierter $C_2$-$C_{10}$-Alk-1-ene besteht.

Unter einpolymerisierten $C_2$-$C_{10}$-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung des erfindungsgemäß zu verwendenden Polymerisats $a_1$) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren sowohl in der Gasphase, als auch in einer Aufschlämmung oder in einer Lösung durchgeführt werden. Diese enthalten u.a. neben einer titanhaltigen Feststoffkomponente noch Cokatalysatoren. Als Cokatalysatoren kommen dabei Aluminiumverbindungen zusammen mit Elektronendonorverbindungen in Frage.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel $SiO_2 \cdot aAl_2O_3$, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 $\mu$m, insbesondere von 10 bis 300 $\mu$m, ein Porenvolumen von 0,1 bis 10 $cm^3$/g, insbesondere von 1,0 bis 5,0 $cm^3$/g und eine spezifische Oberfläche von 10 bis 1000 $m^2$/g, insbesondere von 100 bis 500 m2/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi- ($C_1$-$C_{10}$-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente in der Regel noch Elektronendonorverbindungen, beispielsweise mono- oder polyfunktionelle Carbonsäuren, Carbonsäureanhydride und Carbonsäureester,

Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (II)

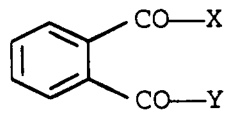

(II)

verwendet, wobei X und Y jeweils für Chlor oder einen $C_1$- bis $C_{10}$-Alkoryrest oder gemeinsam für Sauerstoff stehen. Besonders bevorzugte Elektronendonorverbindungen sind Phthalsäureester, wobei X und Y $C_1$-$C_8$-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls sübstituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner Phenole, Naphthole sowie die $C_1$-$C_{10}$-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder $SiO_2 \cdot aAl_2O_3$ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120 °C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel (II) hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150 °C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150 °C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorensystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel (III)

$R^1{}_nSi(OR^2)_{4-n}$ (III)

wobei $R^1$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ gleich oder verschieden ist und eine $C_1$- bis $C_{20}$-Alkylgruppe bezeichnet und n für die Zahlen 1, 2 oder 3 steht. Besonders bevorzugt werden dabei solche Verbindungen, in denen $R^1$ eine $C_1$- bis $C_8$-Alkylgruppe oder eine 5- bis 7-gliedrige Cycloalkylgruppe, $R^2$ eine $C_1$- bis $C_4$-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die in den erfindungsgemäßen, teilvernetzten Kunststoffmassen enthaltenen Polymerisate $a_1$) hergestellt werden. Nach einem bevorzugten zweistufigen Verfahren wird dabei zunächst in einer ersten Polymerisationsstufe das Propylencopolymerisat (I), und daran anschließend in einer zweiten Polymerisationsstufe das Propylencopolymerisat (II) produziert.

Die Copolymerisation des Propylens und der entsprechenden $C_2$-$C_{10}$-Alk-1-ene wird in der ersten Polymerisationsstufe üblicherweise bei einem Druck von 20 bis 40 bar, einer Temperatur von 60 bis 90 °C und einer mittleren Verweilzeit des Reaktionsgemisches von 1 bis 5 Stunden durchgeführt. Bevorzugt sind bei der Herstellung des Propylencopolymerisats (I) Drücke von 25 bis 35 bar, Temperaturen von 65 bis 85 °C und mittlere Verweilzeiten von 1,5 bis 4 Stunden. Vorzugsweise wählt man dabei die Reaktionsbedingungen so, daß in dieser ersten Polymerisationsstufe pro mmol der Aluminiumkomponente 0,05 bis 2 kg des Propylencopolymerisats (I) gebildet werden. Als $C_2$-$C_{10}$-Alk-1-en wird dabei insbesondere Ethylen und But-1-en, oder ein Gemisch aus diesen Comonomeren verwendet. Zur Herstellung des Propylencopolymerisats (I) wird das Propylen mit den Comonomeren in der Weise copolymerisiert, daß das Verhältnis zwischen dem Partialdruck des Propylens und dem der Comonomeren auf 10:1 bis 1000:1, insbesondere auf 15:1 bis 500:1, eingestellt wird.

Das hierbei gebildete Propylencopolymerisat (I) wird nach Beendigung der Reaktion zusammen mit dem Katalysator aus der ersten Polymerisationsstufe ausgetragen und in die zweite Polymerisationsstufe eingeführt, wo das Propylencopolymerisat (II) hergestellt wird.

Dies erfolgt in der zweiten Polymerisationsstufe dadurch, daß in Anwesenheit des Propylencopolymerisats (I) Propylen zusammen mit einem oder mehreren $C_2$-$C_{10}$-Alk-1-enen bei Drücken von 5 bis 25 bar, Temperaturen von 30 bis 80 °C und mittleren Verweilzeiten des Reaktionsgemisches von 1 bis 5 Stunden polymerisiert wird. Bevorzugt sind dabei Drücke von 10 bis 20 bar, Temperaturen von 40 bis 70 °C und mittlere Verweilzeiten von 1,5 bis 4 Stunden. Üblicherweise liegen dabei die Drücke in der zweiten Polymerisationsstufe um wenigstens 7, vorzugsweise um wenigstens 10 bar unter denen in der ersten Polymerisationsstufe. Als $C_2$-$C_{10}$-Alk-1-ene werden dabei insbesondere Ethylen und But-1-en, oder ein Gemisch aus diesen Comonomeren eingesetzt. Zur Herstellung des Copolymerisats (II) wird das Propylen mit den Comonomeren in der Weise copolymerisiert, daß das Verhältnis zwischen dem Partialdruck des Propylens und dem der Comonomeren auf 0,1:1 bis 20:1, insbesondere auf 0,2:1 bis 15:1, eingestellt wird. Durch geeignete Wahl der Polymerisationsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 20:1, insbesondere im Bereich von 0,6:1 bis 10:1, liegt.

Die Schmelzflußindizes der auf diese Weise erhältlichen Polymerisate $a_1$) liegen im Bereich von 0,1 bis 100, insbesondere im Bereich von 0,5 bis 50 g/10 min, bei 230 °C und 2,16 kg, nach DIN 53 735. Der Schmelzflußindex entspricht dabei derjenigen Menge an Polymerisat, die bei 230 °C und einem Gewicht von 2,16 kg aus der nach DIN 53 735 genormten Prüfvorrichtung ausgetragen wird.

Neben dem Polymerisat $a_1$) können die erfindungsgemäßen teilvernetzten Kunststoffmassen auch das Polymerisat $a_2$), das Propylenhomopolymerisat $a_3$) oder das statistische Propylencopolymerisat $a_4$) enthalten. Was die bei der Herstellung dieser Polymerisate $a_2$) bis $a_4$) verwendeten Reaktoren, Reaktionsbedingungen und Ziegler-Natta-Katalysatoren betrifft, so verweisen wir auf die entsprechenden Angaben bzgl. der Herstellung der Polymerisate $a_1$).

Das Polymerisat $a_2$ besteht insbesondere aus 25 bis 97 Gew.-% eines Propylenhomopolymerisats und 3 bis 75 Gew.-% eines Propylencopolymerisats mit einpolymerisierten $C_2$-$C_{10}$-Alk-1-enen, wobei der Comonomerengehalt 15 bis 80 Gew.-%, bezogen auf die letztere Komponente beträgt. Bevorzugt sind dabei Kunststoffmassen, deren Polymerisat $a_2$) aus 35 bis 95 Gew.-% eines Propylenhomopolymerisats und 5 bis 65 Gew.-% eines Propylencopolymerisats besteht, wobei der Comonomerengehalt 20 bis 75 Gew.-%, bezogen auf die letztere Komponente, beträgt. Besonders bevorzugte Kunststoffmassen enthalten ein Polymerisat $a_2$) aus 40 bis 93 Gew.-% eines Propylenhomopolymerisats und 7 bis 60 Gew.-% eines Propylencopolymerisats. In diesem Fall liegt der Comonomerengehalt bei 25 bis 70 Gew.-%, bezogen auf die letztere Komponente. Unter einpolymerisierten $C_2$-$C_{10}$-Alk-1- enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Das Polymerisate $a_2$ wird vorzugsweise in der Weise hergestellt, daß man in einer ersten Polymerisationsstufe Propylen polymerisiert und dem daraus erhältlichen Propylenhomopolymerisat in einer zweiten Polymerisationsstufe ein Gemisch aus Propylen und einem oder mehreren $C_2$-$C_{10}$-Alk-1-enen hinzupolymerisiert.

Die Polymerisation des Propylens wird in der ersten Polymerisationsstufe bei einem Druck von 20 bis 40 bar, einer Temperatur von 60 bis 90 °C und einer mittleren Verweilzeit des Reaktionsgemisches von 1 bis 5 Stunden durchgeführt. Bevorzugt sind dabei Drücke von 20 bis 35 bar, Temperaturen von 65 bis 85 °C und mittlere Verweilzeiten von 1,5 bis 4 Stunden. Man wählt die Reaktionsbedingungen vorzugsweise so, daß in der ersten Polymerisationsstufe pro mmol der Aluminiumkomponente 0,05 bis 2 kg, bevorzugt 0,1 bis 1,5 kg, Propylenhomopolymerisat gebildet werden. Zur Molmassenregelung können die bei der Polymerisation von Alk-1-enen üblichen Regler, beispielsweise Wasserstoff mitverwendet werden.

Dieses Propylenhomopolymerisat wird nach Beendigung der Reaktion mit dem Katalysator aus der ersten Polymerisationsstufe ausgetragen und in die zweiten Polymerisationsstufe eingeführt, wo diesem ein Gemisch von Propylen und einem oder mehreren $C_2$-$C_{10}$-Alk-1-enen hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80 °C und die mittlere Verweilzeit des Polymerisats beträgt 1 bis 5 Stunden, bevorzugt 1,5 bis 4 Stunden. In dieser zweiten Polymerisationsstufe wird das Verhältnis der Partialdrücke zwischen Propylen und den einpolymerisierten $C_2$-$C_{10}$-Alk-1- enen auf 0,1:1 bis 10:1 eingestellt. Durch geeignete Wahl der Reaktionsparameter sollte ferner darauf geachtet werden, daß das Gewichtsverhältnis zwischen den in der ersten und den in der zweiten Polymerisationsstufe umgesetzten Monomeren 0,2:1 bis 20:1, insbesondere 0,4:1 bis 15:1, beträgt.

Die Schmelzflußindizes der auf diese Weise erhältlichen Polymerisate $a_2$) liegen bevorzugt im Bereich von 0,1 bis 100, insbesondere im Bereich von 0,5 bis 50 g/10 min., bei 230 °C und 2,16 kg, nach DIN 53 735.

In den erfindungsgemäßen teilvernetzten Kunststoffmassen können auch Propylenhomopolymerisate $a_3$) enthalten sein. Die Herstellung derartiger Propylenhomopolymerisate $a_3$) erfolgt dabei durch Polymerisation von Propylen in einem oder mehreren hintereinander geschalteten Reaktoren.

Die Polymerisation des Propylens wird üblicherweise bei einem Druck von 20 bis 40 bar, einer Temperatur von 60 bis 90 °C und einer mittleren Verweilzeit des Reaktionsgemisches von 1 bis 5 Stunden durchgeführt. Bevorzugt sind dabei Drücke von 20 bis 35 bar, Temperaturen von 65 bis 85 °C und mittlere Verweilzeiten von 1,5 bis 4 Stunden. Man wählt die Reaktionsbedingungen vorzugsweise so, daß pro mmol der Aluminiumkomponente 0,05 bis 2 kg, bevorzugt 0,1 bis 1,5 kg, Propylenhomopolymerisat $a_3$) gebildet werden. Die Molmasse des Propylenhomopolymerisats $a_3$) kann durch die in der Polymerisationstechnik gebräuchlichen Regler, beispielsweise Wasserstoff kontrolliert werden. Zur Molmassenregelung werden bei der Polymerisation des Propylens auch gelegentlich geringe Mengen an weiteren $C_2$-$C_{10}$-Alk-1-enen, beispielsweise von Ethylen, But-1-en, Pent-1-en oder Hex-1-en eingesetzt. Dies hat zur Folge, daß in dem hergestellten Propylenhomopolymerisat $a_3$) noch bis zu 0,05 Gew.-%, vorzugsweise bis zu 0,02 Gew.-% an weiteren $C_2$-$C_{10}$-Alk-1-enen vorliegen können.

Die Schmelzflußindizes der Propylenhomopolymerisate $a_3$) liegen üblicherweise im Bereich von 0,1 bis 100, insbesondere im Bereich von 0,5 bis 50 g/10 min, bei 230 °C und 2,16 kg, nach DIN 53 735.

Weiterhin können die erfindungsgemäßen teilvernetzten Kunststoffmassen ein statistisches Propylencopolymerisat $a_4$) mit einpolymerisierten $C_2$-$C_{10}$-Alk-1-enen enthalten, wobei der Comonomerengehalt weniger als 15 Gew.-% beträgt. Bevorzugt sind dabei solche statistischen Propylencopolymerisate $a_4$), bei denen der Comonomerengehalt weniger als 12 Gew.-% beträgt. Besonders bevorzugte teilvernetzte Kunststoffmassen weisen ein solches statistisches Propylencopolymerisat $a_4$) auf, dessen Comonomerengehalt im Bereich von 1,0 bis 10 Gew.-% liegt. Unter einpolymerisierten $C_2$-$C_{10}$-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Vorzugsweise sind die statistischen Propylencopolymerisate $a_4$) nach einem ein- oder mehrstufigen Verfahren erhältlich, wobei in der Gasphase Propylen mit einem oder mehreren $C_2$-$C_{10}$-Alk-1-enen bei Temperaturen von 60 bis 90 °C, Drücken von 20 bis 40 bar und mittleren Verweilzeiten des Reaktionsgemisches von 1 bis 5 Stunden umgesetzt wird. Bevorzugt sind dabei Temperaturen von 65 bis 85 °C, Drücke von 20 bis 35 bar und mittlere Verweilzeiten von 1,5 bis 4 Stunden. Üblicherweise liegen dabei die Comonomere Propylen und das oder die $C_2$-$C_{10}$-Alk-1-ene in solchen Mengen vor, daß das Partialdruckverhältnis zwischen Propylen und dem oder den $C_2$-$C_{10}$-Alk-1-enen 5:1 bis 100:1, insbesondere 5:1 bis 50:1 beträgt. Zur Molmassenregelung können dabei auch Regler wie beispielsweise Wasserstoff eingesetzt werden.

Die auf diese Weise erhältlichen statistischen Propylencopolymerisate $a_4$) weisen einen Schmelzflußindex von 0,1 bis 100 g/10 min, insbesondere von 0,1 bis 50 g/10 min auf.

Weiterhin enthalten die erfindungsgemäßen, teilvernetzten Kunststoffmassen eine Metallverbindung b) eine der folgenden Formeln (Ia) oder (Ib)

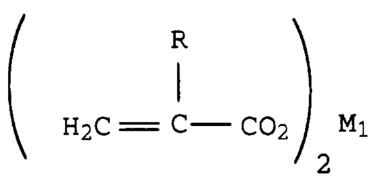

(Ia) ,

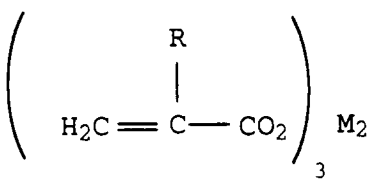

(Ib) ,

wobei

R für Wasserstoff oder eine $C_1$-$C_4$-Alkylgruppe steht,

$M_1$ ein Metall der II. Hauptgruppe des Periodensystems oder Zink bedeutet und

$M_2$ Bor oder Aluminium bedeutet.

Bevorzugte Metallverbindungen b) sind dabei solche Verbindungen, bei denen R für Wasserstoff, einen Methylrest oder einen Ethylrest steht, wobei die beiden erstgenannten Reste, Wasserstoff oder Methylrest, besonders bevorzugt sind. Als Beispiele sind insbesondere Zinkdiacrylat oder Zinkdimethacrylat zu erwähnen.

Als Metallverbindungen b) verwendet man insbesondere auch solche Verbindungen der Formel (Ia), bei denen $M_1$ für Calzium, Magnesium oder Zink steht. Dabei bedeuten die Bezeichnung $M_1$ und $M_2$ in den Formeln (Ia) und (Ib) jeweils die Ionen der einzelnen ausgewählten Metalle.

Anstelle einer Metallverbindung b) können auch zwei oder mehrere dieser Verbindungen eingesetzt werden. Die Metallverbindungen b) werden nach üblichen Verfahren hergestellt, beispielsweise durch Neutralisation der zugrundeliegenden Säuren mit den entsprechenden Metallhydroxiden, Oxiden oder Carbonaten. Darüber hinaus sind sie auch im Fachhandel käuflich.

Die erfindungsgemäßen, teilvernetzten Kunststoffmassen sind erhältlich durch Umsetzung des Polymerisats $a_1$), $a_2$), $a_3$) oder $a_4$) mit der Metallverbindung b) bei Temperaturen von 180 bis 280 °C, Drücken von 1 bis 100 bar und mittleren Verweilzeiten des Reaktionsgemisches von 0,2 bis 10 Minuten. Bevorzugt sind dabei Temperaturen von 190 bis 260 °C, Drücke von 1 bis 60 bar und mittlere Verweilzeiten von 0,2 bis 5 Minuten. Die Umsetzung der einzelnen Komponenten miteinander erfolgt in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern.

Die Umsetzung des Polymerisats $a_1$), $a_2$), $a_3$) oder $a_4$) mit der Metallverbindung b) zu den erfindungsgemäßen, teilvernetzten Kunststoffmassen kann sowohl in Abwesenheit, als auch in Anwesenheit eines radikalisch zerfallenden Initiators erfolgen.

Als radikalische Initiatoren werden vorzugsweise organische Peroxide oder Azoverbindungen eingesetzt. Bevorzugt werden dabei solche organischen Peroxidverbindungen verwendet, die bei einer Temperatur von 210 °C Halbwertszeiten von 1 bis 30 Sekunden aufweisen. Innerhalb dieser Verbindungen sind insbesondere Dicumylperoxid, Monocumyl(tert.-butyl)-peroxid, Di(tert.-butyl)peroxid, 2,5-Dimethyl-2,5-di(tert.-butylperoxy)hexan und 2,5-Dimethyl-2,5-di(tert.-butylperoxy)hexin (3) hervorzuheben.

Zur Herstellung der erfindungsgemäßen, teilvernetzten Kunststoffmassen werden pro 100 Gew.-Teile des Polymerisats $a_1$ bis $a_4$) in der Regel 0,001 bis 5,0 Gew.-Teile der Metallverbindung b) und 0 bis 2,0 Gew.-Teile des radikalisch zerfallenden Initiators verwendet. Vorzugsweise werden pro 100 Gew.-Teile des Polymerisats $a_1$), $a_2$), $a_3$) oder $a_4$) 0,01 bis 2,0 Gew.-Teile, insbesondere 0,02 bis 1,0 Gew.-Teile der Metallverbindung b) und 0 bis 1,0 Gew.-Teile, insbesondere 0 bis 0,5 Gew.-Teile des radikalisch zerfallenden Initiators eingesetzt.

Die Umsetzung der Polymerisate $a_1$) bis $a_4$) mit der Metallverbindung b) erfolgt vorzugsweise in Extrudern, insbesondere in Zweischneckenextrudern. In einer bevorzugten Ausführungsform dosiert man das Polymerisat $a_1$) bis $a_4$) zusammen mit der Metallverbindung b) sowie gegebenenfalls dem radikalisch zerfallenden Initiator in den Einzug eines Zweischneckenextruders, wo das Gemisch bei etwa 180 bis 190 °C aufgeschmolzen und anschließend bei 180 bis 280 °C 0,2 bis 10 Minuten lang zur Reaktion gebracht wird.

Die Metallverbindung b) sowie gegebenenfalls der radikalisch zerfallende Initiator können auch nach dem Aufschmelzen des Polymerisats $a_1$), $a_2$), $a_3$) oder $a_4$) in den Extruder gegeben werden.

Nach einem ebenfalls bevorzugten Herstellungsverfahren wird die Metallverbindung b) sowie gegebenenfalls der radikalisch zerfallende Initiator dem Polymerisat $a_1$) bis $a_4$) unmittelbar nach dessen Herstellung in einer, an den Herstellungsreaktor angeschlossenen Mischapparatur hinzugesetzt. Als Mischapparaturen werden dabei insbesondere Extruder verwendet.

Die erfindungsgemäßen teilvernetzten Kunststoffmassen zeichnen sich u.a. durch eine hohe mechanische Festigkeit, insbesondere durch eine hohe Steifigkeit sowie eine gesteigerte Durchstoßfestigkeit, eine hohe Dehnverfestigung, sowie eine verbesserte Bindenahtfestigkeit aus. Im Gegensatz zu vollständig vernetzten Kunststoffen können die erfindungsgemäßen teilvernetzten Kunststoffmassen noch gut verarbeitet werden. Sie sind auf sehr einfache Weise erhältlich, da sowohl die Pfropfung als auch die sich daran anschließende teilweise Vernetzung in einem Herstellungsschritt durchgeführt werden können.

Die erfindungsgemäßen teilvernetzten Kunststoffmassen eignen sich aufgrund ihrer guten Verarbeitbarkeit insbesondere als Materialien für den Spritzguß, das Blasformen, die Extrusion und die Herstellung von Schäumen. Sie können dabei u.a. zur Herstellung von Folien, Fasern und Formkörpern verwendet werden.

Beispiele

In den Beispielen 1 bis 3 sowie dem Vergleichsbeispiel A wurde jeweils eine Vorrichtung verwendet, die

- aus einer Kaskade von zwei verschiedenen, gerührten Autoklaven, die beide das gleiche Nutzvolumen von 200 l aufwiesen und jeweils mit einem bewegten Festbett aus feinteiligem Polypropylen gefüllt waren,
- sowie einem Zweischneckenextruder "ZSK 57" der Firma Werner & Pfleiderer mit einem Längen/Durchmesserverhältnis von 27 bestand. Der Extruder konnte bei einer Schneckendrehzahl von 100 bis 300 Umdrehungen betrieben werden.

In allen Beispielen 1 bis 3 sowie dem Vergleichsbeispiel A wurde das in der Kaskade hergestellte Polymerisat $a_1$) mit der Metallverbindung b) sowie gegebenenfalls mit dem radikalisch zerfallenden Initiator im Zweischneckenextruder vermischt und anschließend über eine Granulierdüse als Strang ausgetragen. Die Vermischung erfolgte bei einer Schneckendrehzahl von etwa 150 Umdrehungen pro Minute.

Beispiel 1

Aus dem letzten Autoklaven der Kaskade wurde ein Polymerisat $a_1$) ausgetragen welches aus 57 Gew.-% eines Propylen-Ethylen-Copolymerisats (I) mit 3,9 Gew.-% einpolymerisiertem Ethylen und 43 Gew.-% eines Propylen-Ethylen-Copolymerisats (II) mit 60 Gew.-% einpolymerisiertem Ethylen bestand und einem Schmelzflußindex von 1,0 g/10 min [bei 230 °C und 2,16 kg, nach DIN 53 735] aufwies. Dieses wurde im Zweischneckenextruder mit 0,4 Gew.-Teilen Zinkdimethacrylat und 0,02 Gew.-Teilen 2,5-Dimethyl-2,5-di-

(tert.-butylperoxy)hexan vermischt und granuliert. Die Temperatur betrug dabei 240 °C, der Druck 20 bar und die mittlere Verweilzeit 30 Sekunden. Danach wurde das Gemisch aus dem Zweischneckenextruder ausgetragen und granuliert. Das erhaltene Produkt war farblos und geruchlos.

Der Schmelzflußindex, die Dehnung bei Streckspannung und die Reißdehnung der dabei erhaltenen Kunststoffmasse können der nachfolgenden Tabelle 1 entnommen werden.

Beispiel 2

100 Gew. -Teile des im Beispiel 1 verwendeten Propylenpolymerisats $a_1$) wurden unter den gleichen Bedingungen wie im Beispiel 1 mit 0,6 Gew.-Teilen Zinkdimethacrylat und 0,04 Gew.-Teilen 2,5-Dimethyl-2,5-di-(tert.-butylperoxy)hexan vermischt und entsprechend aufgearbeitet. Das erhaltene Produkt war farblos und geruchlos.

Der Schmelzflußindex, die Dehnung bei Streckspannung und die Reißdehnung der dabei erhaltenen Kunststoffmasse können der nachfolgenden Tabelle 1 entnommen werden.

Beispiel 3

100 Gew.-Teile des im Beispiel 1 verwendeten Propylenpolymerisats $a_1$) wurden unter den gleichen Bedingungen wie im Beispiel 1 mit 0,4 Gew.-Teilen Zinkdiacrylat und 0,02 Gew.-Teilen 2,5-Dimethyl-2,5-di-(tert.-butylperoxy)hexan vermischt und entsprechend aufgearbeitet. Das erhaltene Produkt war farblos und geruchlos.

Der Schmelzflußindex, die Dehnung bei Streckspannung und die Reißdehnung der dabei erhaltenen Kunststoffmasse können der nachfolgenden Tabelle 1 entnommen werden.

Vergleichsbeispiel A

Unter den Bedingungen des Beispiels 1 wurden 100 Gew.-Teile des im Beispiel 1 verwendeten Propylencopolymerisats $a_1$) ohne Zusatz einer Zinkverbindung b) und eines Peroxids aufgearbeitet.

Der Schmelzflußindex, die Dehnung bei Streckspannung und die Reißdehnung der dabei erhaltenen Kunststoffmasse können der nachfolgenden Tabelle 1 entnommen werden.

Tabelle 1

| | Beispiel 1 | Beispiel 2 | Beispiel 3 | Vergleichsbeispiel A |
|---|---|---|---|---|
| Schmelzflußindex[a)] [g/10 min] | 2,5 | 2,8 | 3,4 | 1,8 |
| Dehnung bei Streckspannung [b)] - mit Bindenaht - | 10,7 | 12,9 | 11,8 | 9,8 |
| Reißdehnung [b)] - mit Bindenaht - | 14,8 | 23,5 | 18,9 | 6,4 |

a) analog DIN 53 735, bei 230 °C und unter einem Gewicht von 2,16 kg

b) Zur Dehnungsprüfung mit Bindenaht wurden zweiseitige angespritzte Schulterstäbe hergestellt, die in der Mitte eine Bindenaht quer zur Längsachse aufwiesen. Der Schulterstab entsprach dabei in seinen Abmessungen dem Normalschulterstab Typ 1 nach ISO 527 und besaß eine Dicke von 3 mm. Die Herstellung dieses Schulterstabs erfolgte bei einer Temperatur von 250 °C und einer Fließfrontgeschwindigkeit von 200 mm/sec.

An den auf diese Weise hergestellten Schulterstäben wurden durch Zugexperimente nach DIN 53 457 bei 23 °C die Dehnung bei Streckspannung und die Reißdehnung, jeweils mit Bindenaht, bestimmt.

Die Beispiele 4 bis 6 sowie das Vergleichsbeispiel B wurden in einem Zweischneckenextruder ZSK 57 der Firma Werner Pfleiderer mit einem Länge/Durchmesser-Verhältnis von 27 durchgeführt. Die dabei verwendeten Polymerisate $a_2$) wurden als Grieß oder als Granulate dem Zweischneckenextruder zugeführt und dort mit der jeweils eingesetzten Metallverbindung b) und dem radikalischen Initiator aufgeschmolzen.

Beispiel 4

100 Gew.-Teile eines Propylenpolymerisats $a_2$) mit 56 Gew.-% Propylenhomopolymerisat, 44 Gew.-% Propylen-Ethylencopolymerisat [bestimmt durch Extraktionsfraktionierung nach W. Holtrup, Makromol.

Chem. 178, 2335 (1977)], einem Ethylengehalt von 52,5 Gew.-%, bezogen auf die letztere Komponente [bestimmt durch Infrarotspektroskopie] und einem Schmelzflußindex von 2,0 g/10 min [bei 230 °C und 2,16 kg, nach DIN 53735] wurden im Zweischneckenextruder mit 0,2 Gew.-Teilen Zinkdimethacrylat und 0,08 Gew.-Teilen 2,5-Dimethyl-2,5-di(tert.-butylperoxy)hexan vermischt und granuliert. Die Temperatur betrug dabei 240 °C, der Druck 20 bar und die mittlere Verweilzeit 30 Sekunden. Danach wurde das Gemisch aus dem Zweischneckenextruder ausgetragen und granuliert. Das erhaltene Produkt war farblos und geruchlos.

Der Schmelzflußindex, die Dehnung bei Streckspannung und die Reißdehnung der dabei erhaltenen Kunststoffmasse können der nachfolgenden Tabelle 2 entnommen werden.

Beispiel 5

100 Gew.-Teile des im Beispiel 4 verwendeten Propylenpolymerisats $a_2$) wurden unter den gleichen Bedingungen wie im Beispiel 1 mit 0,5 Gew.-Teilen Zinkdimethacrylat und 0,08 Gew.-Teilen 2,5-Dimethyl-2,5-di-(tert.-butylperoxy)hexan vermischt und entsprechend aufgearbeitet. Das erhaltene Produkt war farblos und geruchslos.

Der Schmelzflußindex, die Dehnung bei Streckspannung und die Reißfestigkeit der dabei erhaltenen Kunststoffmassen können der nachfolgenden Tabelle 2 entnommen werden.

Beispiel 6

100 Gew.-Teile des im Beispiel 4 verwendeten Propylenpolymerisats $a_2$) wurden unter den gleichen Bedingungen wie im Beispiel 4 mit 0,5 Gew.-Teilen Zinkdiacrylat und 0,08 Gew.-Teilen 2,5-Dimethyl-2,5-di-(tert.-butylperoxy)hexan vermischt und entsprechend aufgearbeitet. Das erhaltene Produkt war farblos und geruchslos.

Der Schmelzflußindex, die Dehnung bei Streckspannung und die Reißfestigkeit der dabei erhaltenen Kunststoffmassen können der nachfolgenden Tabelle 2 entnommen werden.

Vergleichsbeispiel B

Unter den Bedingungen des Beispiels 4 wurden 100 Gew.-Teile des im Beispiel 4 verwendeten Propylencopolymerisats $a_2$) ohne Zusatz einer Zinkverbindung b) und eines Peroxids aufgearbeitet.

Der Schmelzflußindex, die Dehnung bei Streckspannung und die Reißdehnung der dabei erhaltenen Kunststoffmasse können der nachfolgenden Tabelle 2 entnommen werden.

Tabelle 2

| | Bsp. 4 | Bsp. 5 | Bsp. 6 | Vgl.Bsp. B |
|---|---|---|---|---|
| Schmelzflußindex[a)] [g/10 min] | 12,5 | 7,8 | 14,2 | 2,8 |
| Dehnung bei Streckspannung[b)] - mit Bindenaht - | 7,2 | 8,2 | 8,3 | 3,4 |
| Reißdehnung[b)] - mit Bindenaht - | 11,7 | 45,6 | 21,3 | 6,2 |

a) analog DIN 53 735, bei 230 °C und unter einem Gewicht von 2,16 kg
b) Zur Dehnungsprüfung mit Bindenaht wurden zweiseitig angespritzte Schulterstäbe hergestellt, die in der Mitte eine Bindenaht quer zur Längsachse aufwiesen. Der Schulterstab entsprach dabei in seinen Abmessungen dem Normalschulterstab Typ 1 nach ISO 527 und besaß eine Dicke von 3 mm. Die Herstellung dieses Schulterstabs erfolgte bei einer Temperatur von 250 °C und einer Fließfrontgeschwindigkeit von 200 mm/sec.

An den auf diese Weise hergestellten Schulterstäben wurden durch Zugexperimente nach DIN 53 457 bei 23 °C die Dehnung bei Streckspannung und die Reißdehnung, jeweils mit Bindenaht, bestimmt.

Die Beispiele 7 und 8 sowie die Vergleichsbeispiele C und D wurden in einem Zweischneckenextruder ZSK 57 der Firma Werner & Pfleiderer mit einem Länge/Durchmesser-Verhältnis von 27 durchgeführt. Die dabei verwendeten Propylenhomopolymerisate $a_3$) bzw. statistischen Propylencopolymerisate $a_4$) wurden als Grieß oder als Granulat dem Zweischneckenextruder zugeführt und dort mit der Metallverbindung b) und dem radikalischen Initiator aufgeschmolzen.

Beispiel 7

100 Gew.-Teile eines Propylenhomopolymerisats $a_3$) mit einem Schmelzflußindex von 1,0 g/10 min, bei 230 °C und 2,16 kg, nach DIN 53 735 wurden im Zweischneckenextruder mit 0,8 Gew.-Teilen Zinkdimethylacrylat und 0,02 Gew.-Teilen 2,5-Dimethyl-2,5-di-(tert.-butylperoxy)-hexan vermischt und granuliert. Die Temperatur betrug dabei 240 °C, der Druck 10 bar und die mittlere Verweilzeit 30 Sekunden. Danach wurde das Gemisch aus dem Zweischneckenextruder ausgetragen und granuliert. Das dabei erhaltene Produkt war farb- und geruchlos. Es wies einen Schmelzflußindex von 1,8 g/10 min, bei 230 °C und 2,16 kg, nach DIN 53 735 und eine gute Schmelzefestigkeit auf.

Vergleichsbeispiel C

100 Gew.-Teile des im Beispiel 7 verwendeten Propylenhomopolymerisats a3) wurden unter den Bedingungen des Beispiels 7 ohne Zusatz der Metallverbindung b) (Zinkdimethacrylat) und ohne Peroxidverbindung aufgearbeitet. Das erhaltene Produkt wies einen Schmelzflußindex von 1,1 g/10 min, bei 230 °C und 2,16 kg, nach DIN 53 735 und eine schlechte Schmelzefestigkeit auf.

Beispiel 8

100 Gew.-Teile eines statistischen Propylencopolymerisats a4) mit einem Schmelzflußindex von 1,0 g/10 min, bei 230 °C und 2,16 kg, nach DIN 53 735 und 2,5 Gew.-% einpolymerisiertem Ethylen [bestimmt durch Fourier-Infrarotspektroskopie] wurden im Zweischneckenextruder mit 0,8 Gew.-Teilen Zinkdimethacrylat und 0,02 Gew.-Teilen 2,5-Dimethyl-2,5-di(tert.-butylperoxy)-hexan vermischt und granuliert. Die Temperatur betrug dabei 240 °C, der Druck 10 bar und die mittlere Verweilzeit 30 Sekunden. Danach wurde das Gemisch aus dem Zweischneckenextruder ausgetragen und granuliert. Das erhaltene Produkt war farb- und geruchlos. Es wies einen Schmelzflußindex von 1,7 g/10 min, bei 230 °C und 2,16 kg, nach DIN 53 735 und eine gute Schmelzefestigkeit auf.

Vergleichsbeispiel D

100 Gew.-Teile des im Beispiel 8 verwendeten statistischen Propylencopolymerisats $a_4$) wurden unter den Bedingungen des Beispiels 8 ohne Zusatz der Metallverbindung b) (Zinkdimethacrylat) und ohne Peroxidverbindung aufgearbeitet.

Das erhaltene Produkt wies einen Schmelzflußindex von 1,2 g/10 min, bei 230 °C und 2,16 kg, nach DIN 53 735 und eine schlechte Schmelzefestigkeit auf.

**Patentansprüche**

**1.** Teilvernetzte Kunststoffmassen mit einem Schmelzflußindex von 0,1 bis 100 g/10 min., bei 230 °C und unter einem Gewicht von 2,16 kg, aus

$a_1$) einem Polymerisat aus 25 bis 97 Gew.-% eines Propylencopolymerisats (I), das 0,1 bis 15 Gew.-% an einpolymerisierten $C_2$-$C_{10}$-Alk-1-enen enthält und aus 3 bis 75 Gew.-% eines weiteren Propylencopolymerisats (II), das 15 bis 80 Gew.-% einpolymerisierte $C_2$-$C_{10}$-Alk-1-ene aufweist oder aus

$a_2$) einem Polymerisat aus 25 bis 97 Gew.-% eines Propylenhomopolymerisats und 3 bis 75 Gew.-% eines Propylencopolymerisats mit einpolymerisierten $C_2$-$C_{10}$-Alk-1-enen, wobei der Comonomerengehalt 15 bis 80 Gew.-%, bezogen auf die letztere Komponente beträgt oder aus

$a_3$) einem Propylenhomopolymerisat mit einem Schmelzflußindex von 0,01 bis 100 g/10 min, bei 230 °C und unter einem Gewicht von 2,16 kg oder aus

$a_4$) einem statistischen Propylencopolymerisat mit einpolymerisierten $C_2$-$C_{10}$-Alk-1-enen, wobei der Comonomerengehalt weniger als 15 Gew.-% beträgt und

b) einer Metallverbindung einer der folgenden Formeln (Ia) oder (Ib)

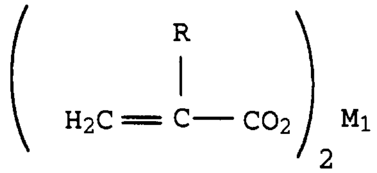

(Ia) ,

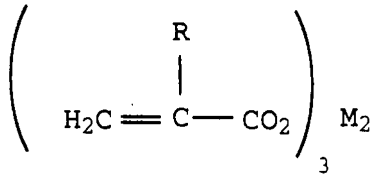

(Ib) ,

wobei

R für Wasserstoff oder eine $C_1$-$C_4$-Alkylgruppe steht,

$M_1$ ein Metall der II. Hauptgruppe des Periodensystems oder Zink bedeutet und

$M_2$ Bor oder Aluminium bedeutet,

erhältlich durch Umsetzung des Polymerisats $a_1$), $a_2$), $a_3$) oder $a_4$) mit der Metallverbindung b) bei Temperaturen von 180 bis 280 °C, Drücken von 1 bis 100 bar und mittleren Verweilzeiten des Reaktionsgemisches von 0,2 bis 10 Minuten.

**2.** Teilvernetzte Kunststoffmassen nach Anspruch 1, erhältlich durch Umsetzung des Polymerisats $a_1$), $a_2$), $a_3$) oder $a_4$) mit der Metallverbindung b) in Anwesenheit eines radikalisch zerfallenden Initiators.

**3.** Teilvernetzte Kunststoffmassen nach einem der Ansprüche 1 oder 2, wobei man das Polymerisat $a_1$) verwendet.

**4.** Teilvernetzte Kunststoffmassen nach einem der Ansprüche 1 oder 2, wobei man das Polymerisat $a_2$) verwendet.

**5.** Teilvernetzte Kunststoffmassen nach einem der Ansprüche 1 oder 2, wobei man das Propylenhomopolymerisat $a_3$) verwendet.

**6.** Teilvernetzte Kunststoffmassen nach einem der Ansprüche 1 oder 2, wobei man das statistische Propylencopolymerisat $a_4$) verwendet.

**7.** Teilvernetzte Kunststoffmassen nach den Ansprüchen 1 bis 6, wobei man pro 100 Gew.-Teile des Polymerisats $a_1$), $a_2$), $a_3$) oder $a_4$) 0,001 bis 5,0 Gew.-Teile der Metallverbindung b) und 0 bis 2 Gew.-Teile des radikalisch zerfallenden Initiators verwendet.

**8.** Teilvernetzte Kunststoffmassen nach Anspruch 3, wobei das Polymerisat $a_1$) aus 35 bis 95 Gew.-% eines Propylencopolymerisats (I) mit 0,2 bis 12 Gew.-% einpolymerisierter $C_2$-$C_{10}$-Alk-1-ene und aus 5 bis 65 Gew.-% eines Propylencopolymerisats (II) mit 20 bis 75 Gew.-% einpolymerisierter $C_2$-$C_{10}$-Alk-1-ene besteht.

**9.** Teilvernetzte Kunststoffmassen nach Anspruch 4, wobei das Polymerisat $a_2$) aus 35 bis 95 Gew.-% eines Propylenhomopolymerisats und 5 bis 65 Gew.-% eines Propylencopolymerisats besteht und der Comonomerengehalt 20 bis 75 Gew.-%, bezogen auf die letztere Komponente, beträgt.

**10.** Teilvernetzte Kunststoffmassen nach Anspruch 5, wobei das Propylenhomopolymerisat $a_3$) einen Schmelzflußindex von 0,1 bis 50 g/10 min, bei 230 °C und unter einem Gewicht von 2,16 kg aufweist.

**11.** Teilvernetzte Kunststoffmassen nach Anspruch 6, wobei das statistische Propylencopolymerisat $a_4$) einen Comonomerengehalt von weniger als 12 Gew.-% aufweist.

**12.** Teilvernetzte Kunststoffmassen nach den Ansprüchen 1 bis 11, wobei als Metallverbindungen b) Verbindungen der Formel (Ia) oder (Ib) verwendet werden, in der R die folgende Bedeutung hat: Wasserstoff, Methylrest, Ethylrest.

**13.** Teilvernetzte Kunststoffmassen nach den Ansprüchen 1 bis 12, wobei als Metallverbindungen b) Verbindungen der Formel (Ia) verwendet werden, in der $M_1$ für Calzium, Magnesium oder Zink steht.

**14.** Teilvernetzte Kunststoffmassen nach den Ansprüchen 2 bis 13, wobei als radikalisch zerfallende Initiatoren organische Peroxide oder Azoverbindungen verwendet werden.

**15.** Verfahren zur Herstellung von teilvernetzten Kunststoffmassen gemäß den Ansprüchen 1 bis 14, dadurch gekennzeichnet, daß man die Umsetzung des Polymerisats $a_1$), $a_2$), $a_3$) oder $a_4$) mit der Metallverbindung b) bei Temperaturen von 190 bis 260 °C, Drücken von 1 bis 60 bar und mittleren Verweilzeiten des Reaktionsgemisches von 0,2 bis 5 Minuten durchführt.

**16.** Verfahren zur Herstellung von teilvernetzten Kunststoffmassen nach Anspruch 15, dadurch gekennzeichnet, daß man die Metallverbindung b) mit dem Polymerisat $a_1$), $a_2$), $a_3$) oder $a_4$) unmittelbar nach dessen Herstellung in einer, an den Herstellungsreaktor angeschlossenen Mischapparatur umsetzt.

**17.** Folien, Fasern und Formkörper aus den teilvernetzten Kunststoffmassen gemäß den Ansprüchen 1 bis 14.

**18.** Schaumstoffe aus den teilvernetzten Kunststoffmassen gemäß den Ansprüchen 1 bis 14.